# EUROPEAN PATENT SPECIFICATION

(11) **EP 2 223 480 B1**
(45) Date of publication and mention of the grant of the patent: **04.05.2011**
(21) Application number: 08852451.7
(22) Date of filing: 18.11.2008
(51) Int. Cl.: H04L 12/58

(54) **ELECTRONIC MAIL SYSTEM OVER A RADIO LINK**
E-MAIL-SYSTEM ÜBER EINE FUNKVERBINDUNG
SYSTÈME DE COURRIER ÉLECTRONIQUE SUR UNE LIAISON RADIO

(30) Priority: 20.11.2007 IT TO20070832
(43) Date of publication of application: 01.09.2010
(73) Proprietor: Selex Communications S.p.A., 16151 Genova (IT)
(72) Inventor: BRUNO, Vittorio, I-00182 Roma (IT); DI ILIO, Claudio, I-00040 Lanuvio (Roma) (IT)
(74) Representative: Deambrogi, Edgardo
(86) International application number: PCT/IB2008/054831
(87) International publication number: WO 2009/066240

(56) References cited:
- RENFREE P ED - INSTITUTE OF ELECTRICAL AND ELECTRONICS ENGINEERS: "The U.S. Navy returns to HF with stanag 5066 as the path" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 October 2001 (2001-10-28), pages 471-476, XP010579057 ISBN: 978-0-7803-7225-2
- D.P. ROESLER: "CURRENT HF INTEROPERABILITY IMPLEMENTATIONS AND APPLICATIONS" HF RADIO SYSTEMS AND TECHNIQUES, 2003. NINTH INTERNATIONAL CONFERENCE ON, [Online] 26 June 2003 (2003-06-26), pages 176-179, XP002519753 ISSN: 0537-9989 ISBN: 0-85296-755-1 Retrieved from the Internet: URL:http://ieeexplore.ieee.org/stamp/stamp .jsp?tp=&arnumber=1350444&isnumber=29689> [retrieved on 2009-03-17]
- JOHNSON E E ED - INSTITUTE OF ELECTRICAL AND ELECTRONICS ENGINEERS: "Interoperability and performance issues in HF e-mail" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 October 2001 (2001-10-28), pages 442-446, XP010579052 ISBN: 978-0-7803-7225-2
- GILLESPIE A F R ET AL: "Client application considerations for low bandwidth communications using STANAG 5066" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 October 2001 (2001-10-28), pages 477-481, XP010579058 ISBN: 978-0-7803-7225-2
- SOYER L ED - INSTITUTE OF ELECTRICAL AND ELECTRONICS ENGINEERS: "HF messenger : European trials and R&D efforts" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 October 2001 (2001-10-28), pages 491-500, XP010579061 ISBN: 978-0-7803-7225-2

## Description

The present invention relates in general to electronic mail management, and more specifically to a system and a method for managing electronic mail over a radio link, such as a system of the type defined in the preamble of Claim 1 and a method defined in the preamble of Claim 6.

The transmission of electronic mail (e-mail) messages between mail domains, at least one of which is not directly and permanently presented on a local area network (LAN) or a geographic network (MAN, WAN, Internet or similar), takes place by providing the connection with the remote domain by means of a radio link.

In particular, this occurs when the sending site or the receiving site of the message, or both, are located on board terrestrial or naval units that can be reached via radio through high-frequency (HF) radio links.

At present, the sending of e-mail messages between mail domains, the connection of which is provided by an HF radio link, takes place using the NATO standard protocol STANAG 5066 version 1.2 and requires the radio operator to have knowledge of the correspondence between the domain of the recipient and the STANAG address of the HF receiving site with which the domain of the recipient is associated. With this information known, the operator must manually set up the radio link over the best available frequency and send the message using dedicated client programs. Furthermore, this operation is impossible if the radio site functions as an electronic mail gateway. Indeed, an operator of the radio site, who has to send a mail message via HF and knows the mail address of the recipient and his STANAG address, can manually set up a radio connection and send the message. If the radio site is a gateway, it receives a mail message from an associated network (intranet) having a HF connected recipient, and therefore functions as a mail relay. The operator who manages the radio site is therefore not capable of knowing to whom the message is addressed, which is the corresponding STANAG address, and which frequencies must be used.

Disclosure of the implementation of an e-mail system operating in the HF spectrum based on the standards MIL-STD-188-110B (interoperability and performance standards for data modems) and STANAG 5066 may be found in the paper *"*The U.S. Navy Returns to HF with STANAG 5066 as the path" by P. Renfree, MILCOM 2001, Proceedings, Communications for Network-Centric Operations: Creating the information force, McLean, Virginia, October 28-30, 2001 (IEEE Military Communications Conference).

The interoperability implementations that have evolved for effective operations using ALE (according to the military standard 188-141) and STANAG 5066 Protocol are discussed in the paper *"*Current HF Interoperability Implementations and Applications" by D.R. Roesler, HF Radio Systems and Techniques 2003, presented at the ninth International Conference ON, dated 26 June 2003.

A further paper documenting the studies about the interoperability and performance of leading standards applicable to e-mail service over HF networks is the one by E. Johnson, "Interoperability and Performance Issues in HF e-mail ", MILCOM 2001, Proceedings, Communications for Network-Centric Operations: Creating the information force, McLean, Virginia, October 28-30, 2001 (IEEE Military Communications Conference).

A.F.R. Gillespie et al. provides for an analysis of the performance of file transfer and e-mail protocols implemented by proxy agents defined in STANAG 5066 for the practical implementation of networked HF applications over STANAG 5066 in a maritime environment. The study is reported in the paper *"*Client application considerations for low bandwidth communications using STANAG 5066", MILCOM 2001, Proceedings, Communications for Network-Centric Operations: Creating the information force, McLean, Virginia, October 28-30, 2001 (IEEE Military Communications Conference).

The aspects of the performance of HF e-mail solutions and the evolution of the STANAG 5066 protocol are further addressed by L. Soyer in "HF Messenger™: European Trials and R&D Efforts", MILCOM 2001, Proceedings, Communications for Network-Centric Operations: Creating the information force, McLean, Virginia, October 28-30, 2001 (IEEE Military Communications Conference).

The aim of the present invention is to provide an electronic mail system which enables messages to be exchanged between a sending site and a receiving site communicating via a radio link in an efficient manner, both in terms of time and resources used.

According to the present invention, such an aim is achieved by virtue of an electronic mail management system having the features referred to in Claim 1, and an electronic mail management method having the features referred to in Claim 6.

Particular embodiments form subjects of the dependent claims.

In summary, the present invention is based on the principle of automatically setting up a radio link between a sending site and a receiving site of a message in order to transmit the message according to the STANAG 5066 protocol.

The system is based on a mail server (possibly a mail server relaying to a plurality of mail clients) arranged to execute a suite of software applications for managing the transmission/reception of messages, and on an HF-band radio transceiver system interfaced by an apparatus for automatically establishing a radio link according to the ALE (Automatic Link Establishment) standard, used to establish and maintain radio communications at high frequency, in which the signals are transmitted by ionospheric propagation and therefore subjected to continual changes in the characteristics of the propagation means.

The ALE standard provides for finding the best condition of ionospheric propagation between stations in real time, avoiding the conventional methodology of searching by trial and error, the repeated interrogating at predetermined time intervals when listening to radio beacons and the consulting of complicated prediction maps for the HF transmissions.

The ALE apparatus is adapted to automatically track down a frequency with a good ionospheric propagation path, and to signal the availability of the link to the operators (or to respective control stations taking their place) of both the sites, so as to allow immediate transmission/reception operations.

The system that is a subject of the invention is adapted to manage the transmission of messages from a sending site to a remote receiving site automatically, and equally to be in listening mode and receive e-mails from one or more remote sending sites, establishing the correct radio connection in the HF band of frequencies.

In particular, the system is based on the arrangement and population of a database having predefined correspondences between mail domains known according to the DNS and callsigns of accredited remote sites (ALE addresses) with which such mail domains are registered, and which are adapted for HF radio communication addressing.

To transmit a message, the system that is a subject of the invention obtains the callsign or ALE address of the receiving site corresponding to the domain of the recipient of the message, known to the mail server (possibly received by an associated mail client). The ALE apparatus automatically selects the best frequency available at the time and sends short digital selective calling signals containing this callsign. Every potential receiving station which scans a predetermined spectrum of frequencies in the search for its callsign suspends the scanning once it is recognized and confirms the successful establishment of the link and its availability to communicate through an exchange of signals according to a pre-established handshaking protocol with the transmitting station, the presence of radio operators therefore being unnecessary.

When the transmission is concluded, the transmitting station sends a disconnection signal to the receiving station, enabling it to return to a standby operating mode, scanning the predetermined spectrum of communication frequencies.

When the system is not busy transmitting a message, it automatically sets itself up to receive any messages from remote sites, and therefore the radio transceiver means coupled to the mail server scans a predetermined spectrum of frequencies in the search for its callsign, acting as described above for the remote site.

Other features and advantages of the invention will be presented in greater detail in the following detailed description of one of its embodiments, given by way of non-limiting example, with reference to the accompanying drawings in which:
Figure 1 is an illustrative schematic representation of a hardware architecture of the mail management system according to the invention;
Figure 2 is an illustrative schematic representation of a software architecture of the mail management system according to the invention; and
Figure 3 is a diagram of events of the sequence for sending a mail message using the system according to the invention.

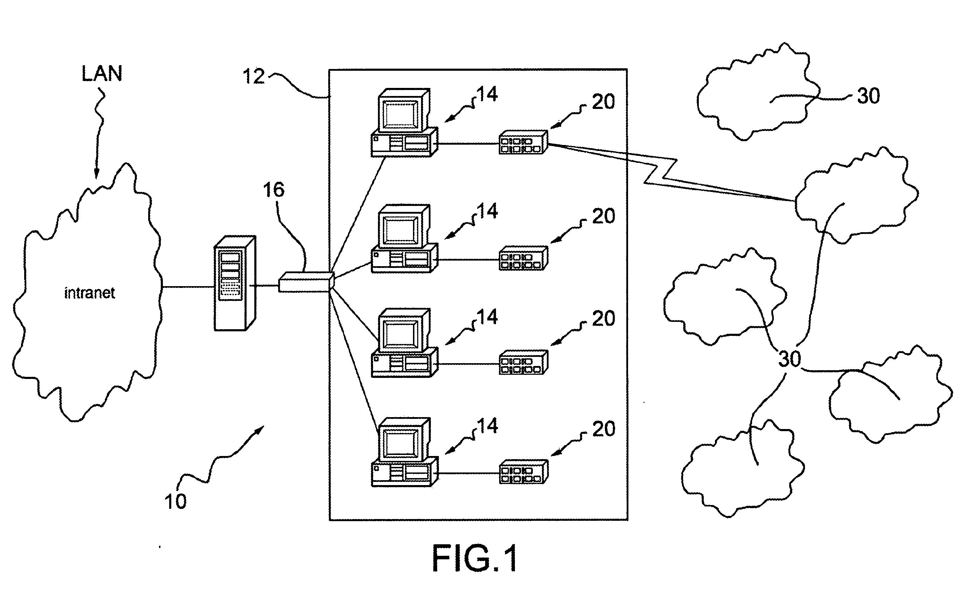

Figure 1 shows an electronic mail management system 10 that is a subject of the invention, installed in an HF radio site (or Radio Centre) 12 comprising one or more mail server stations 14 which also function as DNS servers. In the example illustrated, four mail servers 14 connected to each other in a local area network provide for a fault-tolerant operation of the system and a balancing of the workload.

A router 16 links the servers 14 to a local area network LAN, on which mail clients or DNS servers are presented, and therefore the entire system is capable of operating as a gateway.

The Radio Centre also comprises supervision processing means adapted to execute software application programs for supervising the mail servers 14, each of which is adapted to execute a respective electronic mail management software application.

To every server 14, there is connected a radio transceiver system 20 and apparatus for automatically establishing a radio link according to the ALE protocol in order to provide HF communications to remote sites 30.

The individual servers also comprise a database populated with the correspondences between mail domains and ALE addresses, and every server 14 is arranged to read the domain of the recipient of the e-mail and to automatically provide for establishing the correct HF radio link with the recipient site using the best frequency available with the aid of the ALE apparatus.

Each DNS server of the local area network LAN external to the system 10 is adapted to forward to the servers 14, via the router 16, e-mails intended for the domains present in the remote HF sites.

The servers 14 are coordinated by the supervision processing means in the management of fault tolerance procedures and homogeneous dividing of the workload, adapted to consult pre-established tables of priority of HF domains.

On every server 14 of the system, the following software applications are present:
- e-mail server;
- implementation of the STANAG 5066 protocol;
- remote control of the ALE apparatus;
- management of the address correspondence database;
- e-mail client;
- system configuration.

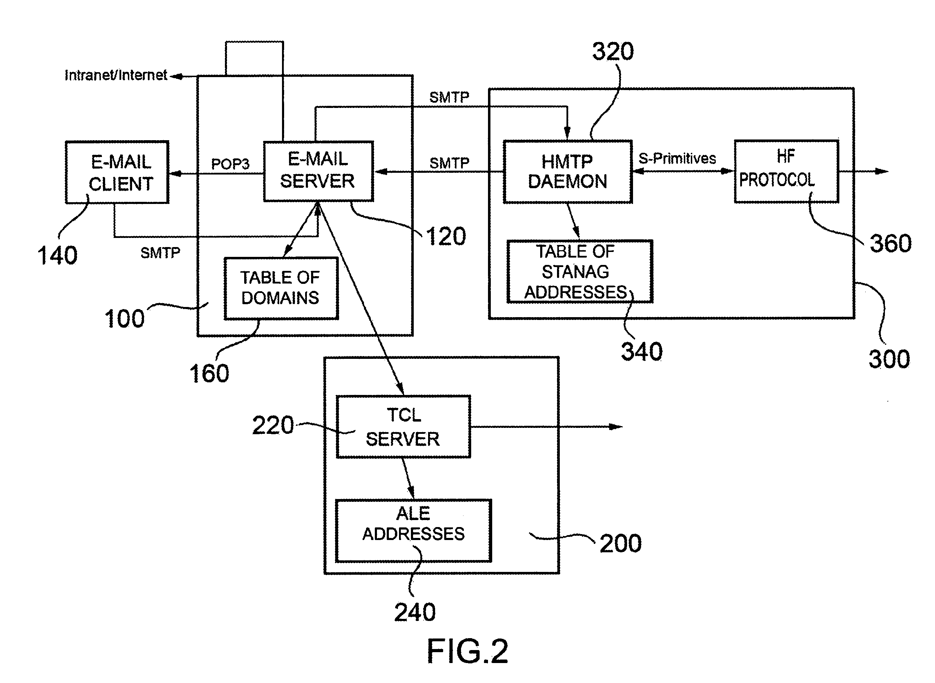

Figure 2 shows a software architecture of the system, indicating the main software blocks and their communication protocols.

There are identified a mail server block 100, an ALE control block 200 and a block 300 for conversion to the STANAG 5066 protocol, which are installed on each of the servers 14 of a gateway HF radio site.

The mail server block 100 comprises an e-mail server management module 120, adapted to be interfaced with an external e-mail client management module 140 installed locally on a mail client belonging to the network LAN, and a table of mail domains 160 that can be consulted by the e-mail server management module 120.

The ALE control block 200 comprises a TCL server module 220 adapted to control the ALE apparatus and a table of ALE addresses 240.

The block 300 for conversion to the STANAG 5066 protocol comprises an HMTP daemon module 320 adapted to be interfaced with the e-mail server management module 120 of the mail server block 100, a table of STANAG addresses 340 that can be read by the module 320 and an HF protocol module 360 adapted to exchange S_Primitives with the HMTP daemon module 320 and to transmit the message over the HF network.

The mail server block 100 and the block 300 for conversion to the STANAG 5066 protocol communicate with each other using the standard SMTP protocol, while the mail server block 100 and the ALE control block 200 communicate using a predefined proprietary protocol.

The three blocks (software components) are initiated when the radio site equipment starts up. The mail server block 100 checks for the presence of the other two blocks, and places itself on standby for messages to be sent.

If a message is intended for an HF site, the system will follow the procedure described below; if instead the message is intended for a non-HF site (intranet/internet) the system will proceed to forward the message to the relevant mail servers in the standard mode of operation of a mail server.

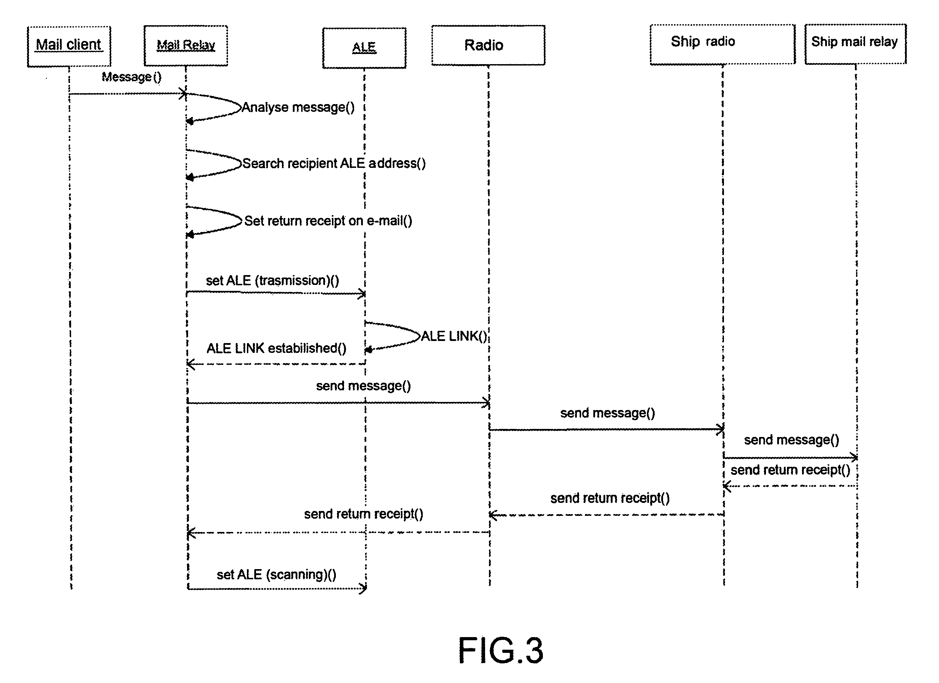

The operation of the system according to the invention is described with reference to the events diagram of Figure 3.

When a server 14 of the radio site 12, where the system according to the invention is installed, receives a mail message (if more than one server is present, the task of managing the message is taken up by one of them, provided it is operational, according to a workload balancing logic) from a client or DNS server of the network LAN associated with it for sending to a remote receiving site, for example on board a naval unit, via an HF radio link, the mail management system according to the invention executes the following operations:
checks the address of the recipient;
identifies the mail server of the recipient and the ALE address of the remote site associated with it;
sends commands to the ALE apparatus in order to establish the HF radio connection with the remote site using the best frequency available;
waits for the radio link to be set up in order to send the e-mail;
sets up a return receipt request on the e-mail;
sends the e-mail;
waits for the return receipt from the remote server;
brings down the radio link;
sets up the ALE apparatus to receive any calls by remote HF sites.

Advantageously, the electronic mail management system according to the invention enables:
- the sending of mail messages from a server of the Radio Centre to a (computer of a) remote site via the HF-band radio transceiver system and associated apparatus for establishing the radio link according to the ALE standard;
- the reception of e-mail from (the computers of) remote sites and the switching to the addressed mail client associated with the server of the Radio Centre.

Conveniently, the system also has the features of a gateway server, namely:
- from each mail client networked with a server of the Radio Centre site, it is possible to send a mail message to a remote domain using the same Radio Centre site as gateway, maximizing the decoupling between the site and the external network;
- a remote HF site (for example on board a naval unit) will be able to send a mail message addressed to a user of an Intranet/Internet network associated with a server of the Radio Centre, using the Radio Centre site as gateway.

The system according to the invention therefore provides reliability, efficiency and minimal local/remote configuration of HF sites.

Naturally, the principle of the invention remaining the same, the forms of embodiment and details of construction may be varied widely with respect to that described and illustrated purely by way of non-limiting example, without thereby departing from the scope of protection of the present invention, which scope of protection is defined by the accompanying claims.

## Claims

1. Electronic mail management system (10), comprising at least one mail server (14) adapted to accept mail messages generated by associated mail domains and transmit said messages to a remote receiving site (30), as well as adapted to receive mail messages originating from a remote sending site (30) and addressed to an associated mail domain, said remote site (30) being identifiable by a respective remote mail domain and accessible via a data communication path including a high-frequency radio link with a radio station associated with said site (30),
comprising HF-band communication radio transceiver means (20) coupled to said mail server (14) and means (200) for automatically establishing a radio link with a remote site (30) receiving a message,
**characterized in that** it comprises a database (160, 240) containing correspondences between mail domains (160) of remote sites (30) and callsigns (240) of the radio station of said remote sites (30); and
**in that** said means (200) for automatically establishing a radio link with a remote site (30) receiving a message are arranged to:
- select a connection frequency in a range of available HF frequencies with a good ionospheric propagation path ;
- establish a radio link with the radio station of said site (30) according to a callsign determined by the correspondence in said database (160, 240) with the remote mail domain;
- attach to the message a return receipt request;
- send the message using the STANAG 5066 protocol; and
- bring down the link upon reception of the return receipt from the remote site (30).

2. System according to Claim 1, in which said means (200) for automatically establishing a radio link comprise apparatus for automatically establishing a radio link according to the ALE, Automatic Link Establishment, standard.

3. System according to either Claim 1 or Claim 2, comprising a plurality of mail servers (14) and means for supervising said servers (14), arranged for the management of fault tolerance procedures and the dividing of workload.

4. System according to Claim 3, in which said supervision means are adapted to consult pre-established tables of priority of HF domains.

5. System according to any one of the preceding claims, in which said radio transceiver means (20) coupled to the mail server (14) possess a specific callsign, so that when the system is not busy transmitting a message, it is arranged to automatically set itself up to receive any messages from remote sites (30), said radio transceiver means (20) scanning a predetermined spectrum of frequencies in the search for its callsign.

6. Electronic mail management method, comprising the operations of:
- using at least one mail server (14), accepting mail messages generated by mail domains associated with said server (14);
- automatically establishing an HF-band radio link with a remote site (30); and
- transmitting said messages to a remote receiving site (30); as well as
- receiving mail messages originating from a remote sending site (30), and addressed to a mail domain associated with a mail server (14),
in which said remote site (30) is identifiable by a respective remote mail domain and accessible via a data communication path including a high-frequency radio link with a radio station associated with said site (30),
**characterized in that** it comprises the operations of:
- arranging a database (160, 240) of correspondences between mail domains (160) of remote sites (30) and callsigns (240) of a corresponding radio station of said remote sites (30); and
- acquiring, by said mail server (14), a message and an associated mail domain of a remote site (30) receiving said message; and
**in that** the automatically establishing of an HF-band radio link with a remote site (30) receiving the message, includes:
- selecting a connection frequency in a range of available HF frequencies with a good ionospheric propagation path;
- establishing a radio link with the radio station of said remote site (30) according to a callsign determined by the correspondence in said database (160, 240) with the remote mail domain;
- attaching to the message a return receipt request;
- sending the message using the STANAG 5066 protocol; and
- bringing down the link upon reception of the return receipt from the remote site (30).

## Patentansprüche

1. E-Mail-Steuerungssystem (10), das wenigstens einen Mailserver (14) aufweist, der geeignet ist, Mailnachrichten anzunehmen, die von zugehörigen Maildomänen erzeugt werden, und diese Nachrichten an eine ferne Empfangsstelle (30) zu übertragen, der ebenso geeignet ist, von einer entfernten Sendestelle (30) stammende Mailnachrichten, die an eine zugehörige Maildomäne adressiert sind, zu empfangen, wobei diese ferne Stelle (30) durch eine jeweilige ferne Maildomäne identifizierbar ist und über einen Datenkommunikationsweg einschließlich einer Hochfrequenzfunkverbindung mit einer Funkstation, die mit dieser Stelle (30) verbunden ist, erreichbar ist,
das eine HF-Band Kommunikations-Funk-Sende-/Empfangseinrichtung (20), die mit dem Mailserver (14) verbunden ist, und Einrichtungen (200) zum automatischen Einrichten einer Funkverbindung mit einer fernen Stelle (30) zum Empfangen einer Nachricht aufweist,
**dadurch gekennzeichnet, dass** es eine Datenbank (160, 240) aufweist, die Entsprechungen zwischen Maildomänen (160) ferner Stellen (30) und Rufzeichnen (240) der Funkstation der fernen Stellen (30) enthält; und
**dadurch**, dass die Einrichtungen (200) zum automatischen Einrichten einer Funkverbindung mit einer fernen Stelle (30), die eine Nachricht empfängt, eingerichtet sind, um:
- eine Verbindungsfrequenz in einem Bereich verfügbarer HF-Frequenzen mit einem guten ionosphärischen Ausbreitungsweg auszuwählen;
- entsprechend einem Rufzeichen, das durch die Entsprechung in der Datenbank (160, 260) mit der fernen Maildomäne bestimmt ist, eine Funkverbindung mit der Funkstation der Stelle (30) einzurichten;
- an die Nachricht eine Empfangsrückbestätigungsanforderung anzuhängen;
- die Nachricht unter Verwendung des STANAG 5066-Protokolls zu senden; und
- die Verbindung nach Empfang der Empfangsrückbestätigung (30) abzubauen.

2. System nach Anspruch 1, wobei die Einrichtungen (200) zum automatischen Einrichten einer Funkverbindung eine Vorrichtung zum automatischen Einrichten einer Funkverbindung nach dem ALE-Standard (Automatic Link Establishment: automatischer Verbindungsaufbau) aufweisen.

3. System nach Anspruch 1 oder Anspruch 2, das mehrere Mailserver (14) und Einrichtungen zum Überwachen dieser Server (14) aufweist, welche für die Steuerung der Fehlertoleranzverfahren und das Aufteilen der Arbeitslast eingerichtet sind.

4. System nach Anspruch 3, in dem die Überwachungseinrichtungen geeignet sind, vorher eingerichtete Prioritätstabellen für HF-Domänen zu konsultieren.

5. System nach einem der vorhergehenden Ansprüche, in dem die Funk-Sende-/Empfangseinrichtung (20), die mit dem Mailserver (14) verbunden ist, ein spezifisches Rufzeichen besitzt, so dass, wenn das System nicht aktiv ist, eine Nachricht zu übertragen, es eingerichtet ist, um sich selbst automatisch einzustellen, um jegliche Nachrichten von fernen Stellen (30) zu empfangen, wobei die Funk-Sende-/Empfangseinrichtung (20) bei der Suche nach ihrem Rufzeichen ein vorgegebenes Frequenzspektrum abtastet.

6. E-Mail-Steuerungsverfahren, das die folgenden Vorgänge aufweist:
- Verwenden wenigstens eines Mailservers (14), der Mailnachrichten annimmt, die von zu dem Server (14) gehörenden Maildomänen erzeugt werden;
- automatisches Einrichten einer HF-Band Funkverbindung mit einer fernen Stelle (30); und
- Übertragen der Nachrichten an eine ferne Empfangsstelle (30); ebenso wie
- Empfangen von Mailnachrichten, die von einer fernen Sendestelle (30) stammen und an eine zu einem Mailserver (14) gehörende Maildomäne adressiert sind,
wobei die ferne Stelle (30) durch eine jeweilige Maildomäne identifizierbar ist und über einen Datenkommunikationsweg einschließlich einer Hochfrequenzfunkverbindung mit einer Funkstation, die mit dieser Stelle (30) verbunden ist, erreichbar ist,
**dadurch gekennzeichnet, dass** es die folgenden Vorgänge aufweist:
- Einrichten einer Datenbank (160, 240) mit Entsprechungen zwischen Maildomänen (160) ferner Stellen (30) und Rufzeichnen (240) einer entsprechenden Funkstation der fernen Stellen (30); und
- Erfassen einer Nachricht und einer zugehörigen Maildomäne einer fernen Stelle (30), die die Nachricht empfängt, durch den Mailserver (14); und
**dadurch**, dass das automatische Einrichten einer HF-Band Funkverbindung mit einer fernen Stelle (30), die die Nachricht empfängt, umfasst:
- Auswählen einer Verbindungsfrequenz in einem Bereich verfügbarer HF-Frequenzen mit einem guten ionosphärischen Ausbreitungsweg;
- Einrichten einer Funkverbindung mit der Funkstation der fernen Stelle (30) entsprechend einem Rufzeichen, das durch die Entsprechung in der Datenbank (160, 260) mit der fernen Maildomäne bestimmt wird;
- Anhängen einer Empfangsrückbestätigungsanforderung an die Nachricht;
- Senden der Nachricht unter Verwendung des STANAG 5066-Protokolls; und
- Abbauen der Verbindung nach Empfang der Empfangsrückbestätigung von der fernen Stelle (30).

## Revendications

1. Système de gestion de courrier électronique (10), comprenant au moins un serveur mail (14) adapté pour accepter des messages de courrier générés par des domaines de courrier associés et transmettre lesdits messages à un site de réception distant (30), en étant adapté aussi pour recevoir des messages de courrier provenant d'un site d'envoi distant (30) et adressé à un domaine de courrier associé, ledit site distant (30) étant identifiable par un domaine de courrier distant respectif et accessible via un chemin de communication de données comprenant une liaison radio haute fréquence avec une station radio associée audit site (30) ;
comprenant un moyen d'émetteur-récepteur radio de communication de bande HF (20) couplé audit serveur de courrier (14) et un moyen (200) pour établir automatiquement une liaison radio avec un site distant (30) recevant un message,
**caractérisé en ce qu'**il comprend une base de données (160, 240) contenant des correspondances entre des domaines de courrier (160) de sites distants (30) et des signes d'appel (240) de la station radio desdits sites distants (30) ; et
**en ce que** lesdits moyens (200) pour établir automatiquement une liaison radio avec un site distant (30) recevant un message sont disposés pour :
- sélectionner une fréquence de connexion dans une gamme de fréquences HF disponibles avec un bon chemin de propagation ionosphérique ;
- établir une liaison radio avec la station radio dudit site (30) selon un indicatif déterminé par la correspondance dans ladite base de données (160, 240) avec le domaine de courrier distant ;
- attacher au message une demande d'accusé de réception ;
- envoyer le message en utilisant le protocole STANAG 5066 ; et
- couper la liaison lors de la réception de l'accusé de réception du site distant (30).

2. Système selon la revendication 1, dans lequel ledit moyen (200) pour établir automatiquement une liaison radio comprend un appareil pour établir automatiquement une liaison radio selon la norme ALE, Etablissement de liaison automatique.

3. Système selon la revendication 1 ou la revendication 2, comprenant une pluralité de serveurs de courrier (14) et un moyen pour superviser lesdits serveurs (14), disposés pour la gestion de procédures à tolérance de panne et la répartition de charge de travail.

4. Système selon la revendication 3, dans lequel lesdits moyens de supervision sont adaptés pour consulter des tables préétablies de priorité de domaines HF.

5. Système selon l'une quelconque des revendications précédentes, dans lequel lesdits moyens d'émetteur/récepteur radio (20) couplés audit serveur de courrier (14) possèdent un indicatif spécifique, de sorte que lorsque le système n'est pas occupé à transmettre un message, il est disposé à se mettre automatiquement lui-même en réception de messages quelconques à partir de sites distants (30), ledit moyen d'émetteur/récepteur radio (20) balayant le spectre prédéterminé de fréquences dans la recherche de son indicatif.

6. Procédé de gestion de courrier électronique, comprenant les opérations de :
- utilisation d'au moins un serveur de courrier (14), acceptant des messages de courrier générés par des domaines de courrier associés audit serveur (14) ;
- établissement automatique d'une liaison radio de bande HF avec un site distant (30) ; et
- transmission desdits messages à un site de réception distant (30) ; ainsi que
- réception de messages de courrier provenant d'un site d'envoi distant (30), et adressé à un domaine de courrier associé à un serveur de courrier (14) ;
dans lequel le site distant (30) est identifiable par un domaine de courrier distant respectif et accessible via un chemin de communication de données comprenant une liaison radio haute fréquence avec une station radio associée audit site (30),
**caractérisé en ce qu'**il comprend les opérations de :
- disposition d'une base de données (160, 240) de correspondances entre des domaines de courrier (160) de sites distants (30) et des signes d'appel (240) d'une station radio correspondante desdits sites distants (30) ; et
- acquisition, par ledit serveur mail (14), d'un message et d'un domaine de courrier associé d'un site distant (30) recevant ledit message ; et
**en ce que** l'établissement automatiquement d'une liaison radio de bande HF avec un site distant (30) recevant le message, comprend :
- la sélection d'une fréquence de connexion dans une gamme de fréquences HF disponibles avec un bon chemin de propagation ionosphérique ;
- l'établissement d'une liaison radio avec la station radio dudit site distant (30) selon un indicatif déterminé par la correspondance dans ladite base de données (160, 240) avec le domaine de courrier distant ;
- l'attachement au message d'une demande d'accusé de réception ;
- l'envoi du message utilisant le protocole STANAG 5066 ; et
- la coupure de la liaison lors de l'accusé de réception à partir du site distant (30).
